# EUROPEAN PATENT APPLICATION

(11) **EP 1 276 300 A2**
(43) Date of publication of application: **15.01.2003**
(21) Application number: 02015450.6
(22) Date of filing: 11.07.2002
(51) Int. Cl.: H04M 1/22, H04M 1/725

(54) **System and methods for illuminating a functional switch on a wireless communication device**

(30) Priority: 13.07.2001 US 905082
(71) Applicant: MITSUBISHI DENKI KABUSHIKI KAISHA, Tokyo 100-8310 (JP)
(72) Inventor: Moran, Sean, Carlsbad, California 92009 (US)
(74) Representative: Popp, Eugen, Dr.

(57) **Abstract**

A wireless communication device comprises a switch housing with a pocket formed therein and an illuminable switch mounted in the pocket for activating a first operating mode. The wireless communication device also comprises a first light source mounted in the housing and configured to illuminate the illuminable switch so as to indicate the status of a second operating mode.

## Description

### BACKGROUND OF THE INVENTION

### Field of the Invention

The invention relates generally to status indicators on wireless communication devices and more specifically to functional illuminable switches on wireless communication devices.

### Background of the Invention

Wireless communication devices, such as mobile phones, continue to shrink in size. Consumer acceptance of such devices turns on compactness, leaving designers and engineers with diminishing external surface area on which to build a device's control keys, switches, buttons, and the like. At the same time, consumers are demanding more and more functionality from their mobile phones and other wireless communication devices, which means that more and more buttons, keys, and switches are required. Thus, attempting to satisfy the consumer leads to directly conflicting requirements, i.e., designers need to add more buttons, keys, switches, etc., to an ever decreasing external surface.

One solution to this problem is to shrink the electronics even further, squeezing a greater number of smaller components into a fixed area. Over the decades, this has been done; however, at some point, component size reaches a minimum acceptable dimension, because the human senses of sight and touch become incapable of visual and tactile differentiation if the control button or LED becomes too miniaturized. Simply put, extreme miniaturization does not serve the user well.

Another solution is the use of soft keys. A soft key is a normal switch or button that can be programmed in software to have multiple functions. The manufacturer or retailer can establish the soft key programming, or it can be user programmable. Thus, functionality is layered into the operation of the switches, keys, and/or buttons themselves. But this approach is limited. If there is too much layering, then the soft key approach becomes too confusing.

As a result, designers of wireless communication devices must find new ways to incorporate user inputs, such as buttons, keys, and switches, without impacting the size of the devices.

### SUMMARY OF THE INVENTION

Disclosed is a system and method for illuminating a functional switch. An illuminable functional switch alleviates the design burden associated with cramming feature buttons and controls onto the limited interface surface area of a wireless communication device. Advantageously as well, placement and illumination of the illuminable functional switch enhances usability in dark settings in addition to providing extra switch functionality for the device.

Thus, in one aspect of the invention, a wireless communication device comprises a switch housing having a pocket formed therein and an illuminable switch mounted in the pocket for activating a first operating mode. The wireless communication device also comprises a first light source mounted in the housing and configured to illuminate the illuminable switch so as to indicate the status of a second operating mode.

The illuminable functional switch can be any type of switch, such as a slider, push button, or rotary dial switch. The illuminable functional switch may be illuminated to indicate one or more of the many device operating modes, including by way of example only: data mode, call answer mode, voice activation mode, and power-on mode. In addition, the illuminable functional switch can be programmed to indicate the status associated with the current switch position, or programmed such that status indication is independent of the mode of operation controlled by the switch.

Other aspects, advantages, and novel features of the invention will become apparent from the following Detailed Description of Preferred Embodiments, when considered in conjunction with the accompanying drawings.

### BRIEF DESCRIPTION OF THE DRAWING

Preferred embodiments of the present inventions taught herein are illustrated by way of example, and not by way of limitation, in the figures of the accompanying drawings, in which:
Figure 1 is a diagram of a mobile phone handset having a illuminable functional switch; and
Figure 2 is a diagram illustrating an example switch assembly in accordance with one embodiment of the invention.

### DETAILED DESCRIPTION OF THE INVENTION

In order to combat the problems described above, designers must devise creative methods to increase the number of buttons, keys, switches, etc., (collectively user inputs), without resorting to undue miniaturization and without increasing the size of the wireless communication devices they design.

Status indicator LEDs (light emitting diodes) are frequently designed into wireless communication devices, such as mobile phones, to provide a visual form of status. LEDs have particular utility in a quiet, dark environment, such as where the user may be in a library or in an audience. In such situations, audible ringing is obviously undesirable; and vibration is impractical unless the phone happens to be in physical contact with the user's body. For a user who carries the phone in a purse, for instance, an LED status indicator is the best choice for quiet public places.

Because visual status indication is superior in so many settings, mobile phone designers complement LED functionality with other lighting technologies like backlighting and electroluminescence (EL). A user-friendly backlit LCD display panel, for example, is noticeably easier to read in the dark. Likewise, electro-luminescent keys help the user find the keypad in poorly lit locations. But in most cases the keys, buttons, and display devices of a mobile phone are illuminated or backlit only upon activation of a key or button. This acts as a disservice for the user in the dark for whom the keys are illuminated only after a key has been depressed. In order to operate the mobile phone, the user must fumble around, pressing random keys until the backlighting is activated. The user can then, after reversing the effects of whatever keys they may have randomly pressed in the dark, perform the function they originally intended.

The problem is worse, when the user is in a dark environment and wishes to turn the mobile phone on. In this case, pressing random keys does not cause the keypad backlighting to come on and, therefore, is not helpful. Instead, the user must fumble around and guess which key is the power on key.

The systems and methods described herein alleviate such problems by placing a functional, illuminable switch in an easy to find common location for such wireless communication devices.

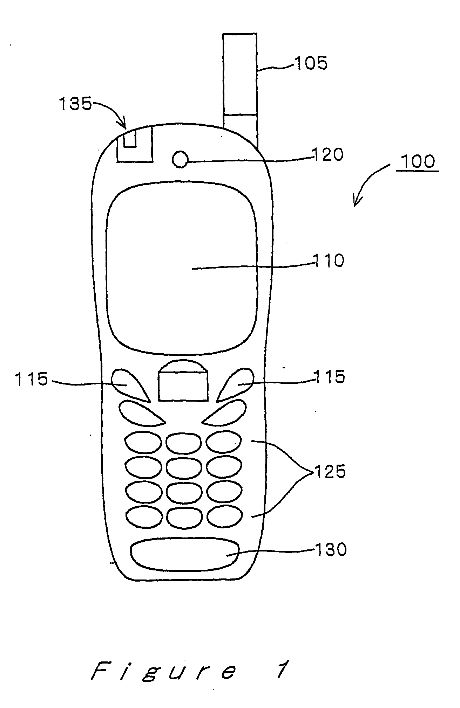

For example, figure 1 illustrates the features of a mobile phone user interface having antenna 105, LCD display 110, one or more buttons 115, earpiece 120, keypad 125, microphone 130, and illuminable functional switch 135. Many mobile phone designs position a visual status indicator on the top-front or top-back of the handset where visibility is easiest When the phone is mounted on the belt or held in-hand. The systems and methods for an illuminable functional switch on a wireless communication device turn the conventional visual status indicator into an active component of mobile phone 100 by making the visual indicator a movable part, i.e., by turning the visual indicator into a illuminable functional switch 135. Furthermore, by designing switch 135 to activate one or more telephone functions or modes, the usability of the crowded interface of mobile phone 100 can be extended.

Antenna 105 interfaces with a local base station transceiver to transmit and receive outgoing and incoming wireless signals to and from the cellular network. LCD display panel 110 supplies the output portion of the user interface, containing status indicator icons in addition to the main menu-driven navigation capabilities. Mobile phone 100 also contains one or more buttons 115 that work with LCD display panel 110 and allow for user selection of highlighted menu options during navigation through the interface. Earpiece 120 houses the speaker and microphone 130 is a highly sensitive transducer that picks up the user's voice and transmits the voice signal to the internal digitizer. Keypad 125 comprises alphanumeric keyss for dialing and/or creating text entries or messages as well as one or more hard keys for ending (disconnecting) or sending (initiating) a call or message delivery.

Illuminable functional switch 135 functions as a switch in addition to indicating status. Illuminable functional switch 135 can be designed to activate or invoke any of the features or operating modes of phone 100. For example, in one embodiment illuminable functional switch 135 can be used to place phone 100 in call answer (or talk) mode. Thus, when a user reaches for phone 100 in the dark or while driving, illuminable functional switch 135 will be in an easy to locate position, eliminating the awkward fumbling and guessing required by conventional devices.

The ergonomic and physical form of illuminable functional switch 135 is irrespective of the assigned functionality and can take on various forms. Illuminable functional switch 135 can be, for example, a simple two-position switch, a push-button control, or even a rotating dial. Moreover, the specific function assigned to switch 135 can be related or unrelated to the status indication attributed to illuminable functional switch 135. Therefore, if switch 135 is used to place phone 100 in call answer mode, then the status indication may or may not also indicate that phone 100 is in call answer mode.

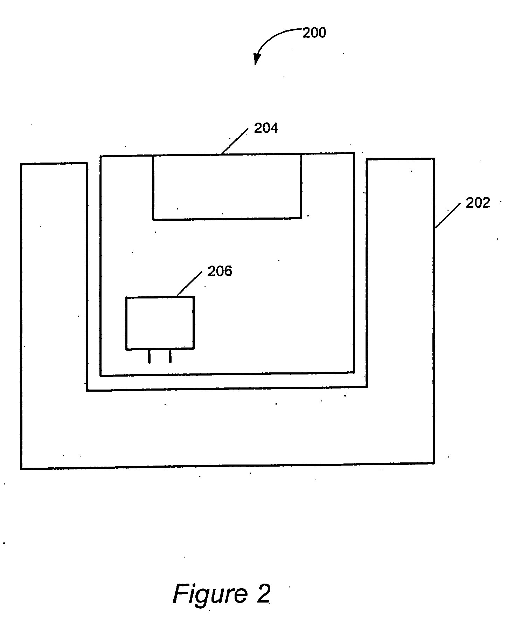

A switch assembly 200, shown in figure 2, houses the components of illuminable functional switch 135. Switch assembly 200 is mounted in housing 202 near the top of mobile phone 100 and provides the structural support for the moving parts and electrical contacts of illuminable functional switch 135. Illuminable functional switch 135 can take on various physical forms depending upon the type of switch employed. For example, illuminable functional switch 135 can be slideably mounted in a pocket formed inside switch assembly 200. Alternatively, illuminable functional switch 135 can be a dual position push-button style of switch or a rotating dial switch. Furthermore, switch 135 can be a single position, dual position, or multiple position switch.

Switch assembly 200 preferably contains a light source 206, such as an LED. Alternatively, light source 206 can be mounted on a PCB (not shown) within phone 100. In latter instance, switch assembly 200 preferably contains a light pipe (not shown). A light pipe is a translucent or transparent member that acts as a guide down which light can propagate. A light pipe is useful to guide light from the light source to an illuminable surface 204 of illuminable functional switch 135 if the light source is mounted on the PCB.

In order to alleviate the crowded condition of mobile phone user interfaces, switch 135 is used to activate and deactivate one or more operating modes for phone 100. For example, switch 135 is preferably used to power on and off phone 100. Thus, when the user is in a dark environment and phone 100 is off, the user will be able to easily feel the location of switch 135 and turn on phone 100. Once phone 100 is on, switch 135 will be illuminated, allowing the user to visually locate switch 135 and turn phone 100 off.

Switch 135 can be used to activate more than one mode of operation. For example, as mentioned above, switch 100 can also be used to place the phone in call answer mode. Thus, if illuminable functional switch 135 is slideable back and forth between two positions, then in the first of the two positions, switch 135 can activate a first mode of operation. When placed in the second of two positions, switch 135 can activate a second mode of operation. Other example operating modes that can be control through manipulation of switch 135 include, voice activation, hands free operation, one or more data modes, call send mode, etc.

Again, illuminable functional switch 135 is also used for status indication. The status indication is provided via light source 206, which can be integrated into switch 135 or mounted on a PCB within phone 100. Thus, if switch 135 is used for powering phone 100 on, then light source 206 can be used to indicate that phone 100 is on. Alternatively, light source 206 can be used to indicate the status of an unrelated mode of operation. For example, while switch 135 is used to turn phone 100 on and off, light source 206 can be used to indicate whether the phone is in data mode or not.

Preferably, illuminable functional switch 135 can be used to indicate the status of several modes of operation. For example, light source 206 can have multiple operating states, such as a steady state and a pulsed state. The steady state can then be used to indicate one mode, e.g., power on, and the pulsed state another, e.g., incoming call received. Thus, when the light source is on and pulsing, the user would know that their phone is powered on and that they have an incoming call.

Light source 206 can even have multiple pulsed operating states, e.g., a fast pulsed state and a slow pulsed state. Thus, the steady state and each pulsed state can represent the status of a different operating mode. For example, power on, and incoming call can be indicated as before, except one of the pulsed states can be used to indicate that the incoming call is an incoming voice call and the other to indicate that it is an incoming data communication. Of course, this approach can be extended to indicate more and/or different operating modes for phone 100 by using even more light source 206 operating states.

Alternatively, multiple light sources can be used for multiple status indications. For example, two light sources of different colors can be used to indicate different states or modes of operation. Thus, one light source can be activated when phone 100 is placed in data communication mode, while the other (not shown) is used to indicate that phone 100 is in voice communication mode. In this case, the power on state can still be indicated by the fact that one or the other light sources is activated, i.e., when phone 100 is powered on, one or the other light sources will come on depending on which mode phone 100 is in. Switch 135 can, therefore, indicate that the phone is on and in one or the other communication modes.

Multiple light source operating states, i.e., steady, slow pulsed, fast pulsed, etc., can also be used for each light source to indicate even more modes of operation, such as incoming voice or data call. Therefore, it should be apparent that multiple light sources, multiple operating states, or a combination of the two can be used to provide multiple status indications to the user. Moreover, the status indications may or may not be related to the operating modes activated and/or deactivated by switch 135.

To further enhance the convenience of switch 135, EL material can be incorporated into switch 135. Thus, the EL material will continue to illuminate switch 135 for some period of time after phone 100 has been turned off. If, for example, the user attempts to turn phone 100 on during this residual period of illumination, assuming switch 135 is used for power on/off, then they will be able to visually locate switch 135.

Therefore, by incorporating the status indicator normally included in a wireless communication device into a illuminable functional switch 135, a broader range of features can be incorporated without increasing the size of the user interface or the number of user inputs. Moreover, by operating switch 135 in accordance with the systems and methods described herein, the awkward fumbling attendant to conventional devices can be avoided and more informative status indication can be provided.

The description contained herein represents the presently preferred embodiments of the invention and is, as such, a representative of the subject matter that is broadly contemplated by the present invention. The scope of the present invention fully encompasses other embodiments that may become obvious to those skilled in the art, and the scope of the present invention is accordingly limited by nothing other than the appended claims.

## Claims

1. A wireless communication device comprising:
a switch housing having a pocket formed therein;
an illuminable switch mounted in the pocket for activating a first operating mode; and
a first light source mounted in the housing and configured to illuminate the illuminable switch so as to indicate the status of a second operating mode.

2. The wireless communication device of claim 1, wherein the first and second operating modes are the same.

3. The wireless communication device of claim 1, wherein the first light source is configured to illuminate the illuminable switch so as to indicate the status of a plurality of operating modes.

4. The wireless communication device of claim 3, wherein the first operating mode is one of the plurality of operating modes.

5. The wireless communication device of claim 1, wherein the switch is configured to activate and/or deactivate a plurality of operating modes.

6. The wireless communication device of claim 5, wherein the second operating mode is one of the plurality of operating modes.

7. The wireless communication device of claim 1, further comprising a second light source configured to illuminate the illuminable switch so as to indicate the status of a third operating mode.

8. The wireless communication device of claim 7, wherein the third operating mode is the same as the first or second operating modes.

9. The wireless communication device of claim 7, wherein the switch is configured to activate and/or deactivate a plurality of operating modes.

10. The wireless communication device of claim 9, wherein the third operating mode is one of the plurality of operating modes.

11. The wireless communication device of claim 7, wherein the first light source is configured to illuminate the illuminable switch so as to indicate the status of a plurality of operating modes.

12. The wireless communication device of claim 11, wherein the first operating mode is one of the plurality of operating modes.

13. The wireless communication device of claim 1, wherein the illuminable switch is a slider switch, a push-button switch, or a rotary dial switch.

14. The wireless communication device of claim 1, further comprising an electro-luminescent material.

15. A wireless communication device comprising:
a switch housing having a pocket formed therein;
an illuminable switch mounted in the pocket for activating a first operating mode; and
a first light pipe configured to receive light from a first light source and to illuminate the illuminable switch so as to indicate the status of a second operating mode.

16. The wireless communication device of claim 15, wherein the first and second operating modes are the same.

17. The wireless communication device of claim 15, wherein the first light pipe is configured to receive light from the first light source so as to illuminate the illuminable switch in a manner that indicates the status of a plurality of operating modes.

18. The wireless communication device of claim 17, wherein the first operating mode is one of the plurality of operating modes.

19. The wireless communication device of claim 15, wherein the switch is configured to activate and/or deactivate a plurality of operating modes.

20. The wireless communication device of claim 19, wherein the second operating mode is one of the plurality of operating modes.

21. The wireless communication device of claim 15, further comprising a second light pipe configured to receive light form a second light source and to illuminate the illuminable switch so as to indicate the status of a third operating mode.

22. The wireless communication device of claim 21, wherein the third operating mode is the same as the first or second operating modes.

23. The wireless communication device of claim 21, wherein the switch is configured to activate and/or deactivate a plurality of operating modes.

24. The wireless communication device of claim 23, wherein the third operating mode is one of the plurality of operating modes.

25. The wireless communication device of claim 21, wherein the second light pipe is configured to receive light from the second light source so as to illuminate the illuminable switch in a manner that indicates the status of a plurality of operating modes.

26. The wireless communication device of claim 25, wherein the first operating mode is one of the plurality of operating modes.

27. The wireless communication device of claim 15, wherein the illuminable switch is a slider switch, a push-button switch, or a rotary dial switch.

28. The wireless communication device of claim 15, further comprising an electro-luminescent material.
